# EUROPÄISCHE PATENTSCHRIFT

(11) **EP 1 011 999 B1**
(45) Veröffentlichungstag und Bekanntmachung des Hinweises auf die Patenterteilung: **26.09.2001**
(21) Anmeldenummer: 98954143.8
(22) Anmeldetag: 05.09.1998
(51) Int. Cl.: B60N 2/50

(54) **FALTENBALG FÜR EIN FAHRZEUGSITZ-UNTERGESTELL**
BELLOW FOR AN AUTOMOBILE SEAT FRAME
SOUFFLET DESTINE A UN SUPPORT DE BATI DE VEHICULE

(30) Priorität: 13.09.1997 DE 29716508 U
(43) Veröffentlichungstag der Anmeldung: 28.06.2000
(73) Patentinhaber: GRAMMER AG, 92224 Amberg (DE)
(72) Erfinder: MEILLER, Hermann, D-92533 Wernberg (DE)
(74) Vertreter: LOUIS, PÖHLAU, LOHRENTZ & SEGETH
(86) Internationale Anmeldenummer: DE9802647
(87) Internationale Veröffentlichungsnummer: WO9914073

(56) Entgegenhaltungen:
- EP-A- 0 530 439
- EP-A- 0 558 408
- DE-C- 3 839 165
- US-A- 4 589 620
- US-A- 4 739 959

## Beschreibung

Die Erfindung betrifft einen Faltenbalg für ein Fahrzeugsitz-Untergestell, wobei der Faltenbalg abwechselnd umlaufende Faltenberge und Faltentäler aufweist.

Bei bekannten Faltenbälgen für das Untergestell von Fahrzeugsitzen, wie z.B. in der US-A-4 739 959, sind die Faltenberge und Faltentäler zick-zack-förmig einfach ziehharmonikaartig gestaltet. Bei solchen bekannten Faltenbälgen kommt es insbes. nach einer längeren Anwendungs- bzw. Einsatzdauer zu einem unerwünschten Einfallen der Faltenberge bzw. -täler, weil die Formstabilität solcher bekannter Faltenbälge insbes. nach einer längeren Anwendungsdauer nachlässt.

Der Erfindung liegt die Aufgabe zugrunde, einen Faltenbalg der eingangs genannten Art zu schaffen, bei welchem die oben genannten Mängel des Einfallens der Faltenberge und - täler bzw. der nachlassenden Formstabilität auf konstruktiv einfache Weise verhindert werden.

Diese Aufgabe wird bei einem Faltenbalg der eingangs genannten Art erfindungsgemäss dadurch gelöst, dass zumindest ein mittlerer Faltenberg umlaufend mit einer stirnseitigen Abflachung ausgebildet ist. Durch diese mindestens eine stirnseitige Abflachung ergibt sich der Vorteil einer Verbesserung der Steifigkeit und somit der Formstabilität des Faltenbalges, bzw. der Vorteil, dass ein Einfallen des Faltenbalgs auch nach einer längeren Anwendungsdauer verhindert wird. Die stirnseitige Abflachung kann ausserdem in vorteilhafter Weise zu dekorativen Zwecken, bspw. zum Anbringen eines Hinweises auf den Hersteller o.dgl. dienen.

Der erfindungsgemässe Faltenbalg kann bspw. drei Faltenberge und zwei Faltentäler aufweisen, wobei der mittlere Faltenberg mit einer stirnseitigen Abflachung ausgebildet ist. Der Faltenbalg kann aus einem geeigneten flexiblen Kunststoffmaterial wie PVC o.dgl. bestehen.

Zur Lösung der der Erfindung zugrundeliegenden Aufgabe ist es zweckmässig, wenn die stirnseitige Abflachung eine grössere Wanddicke besitzt als die Flanken der daran anschliessenden Faltentäler. Hierdurch ist nämlich eine weitere Verbesserung der Formstabilität des Faltenbalges möglich.

Bei dem erfindungsgemässen Faltenbalg ist es zweckmässig,wenn die stirnseitige Abflachung in bezug zum Unterrand des Faltenbalges lotrecht orientiert ist, weil sich hierdurch eine dekorative umlaufende Fläche ergibt, wobei gleichzeitig ein unerwünschtes Einfallen des Faltenbalges verhindert wird.

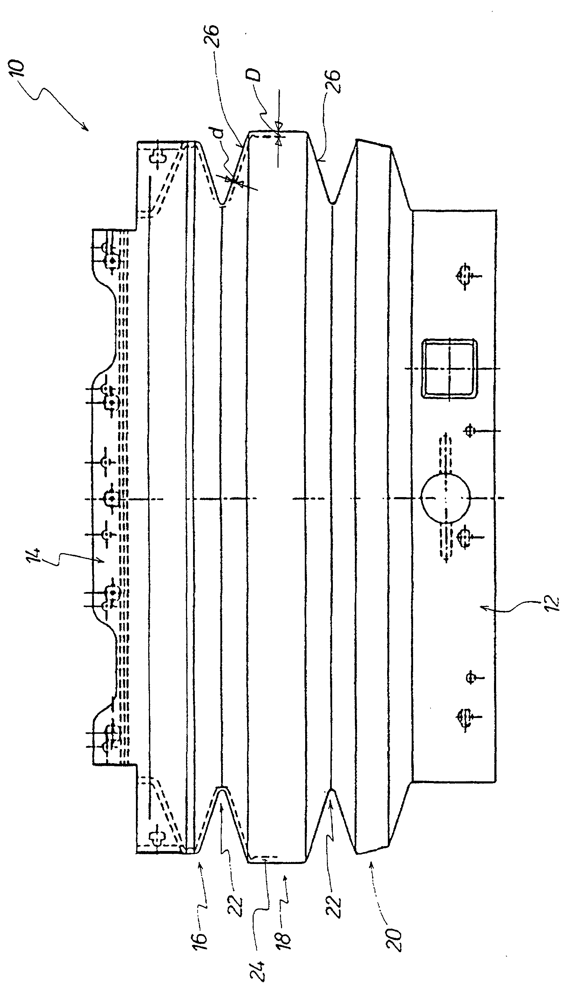

Ein Ausführungsbeispiel des erfindungsgemässen Faltenbalges ist in der Zeichnung in einer Seitenansicht dargestellt. Die Figur zeigt eine Ausbildung des Faltenbalges 10, der zwischen einem Unterrand 12 und einem Oberrand 14 drei Faltenberge 16, 18 und 20 und zwischen diesen zwei Faltentäler 22 aufweist. Die Faltenberge 16, 18 und 20 und die dazwischen vorgesehenen Faltentäler 22 laufen um den eine rechteckige Grundfläche besitzenden Faltenberg 10 um.

Der mittlere Faltenberg 18 ist umlaufend mit einer Abflachung 24 ausgebildet, deren Wanddicke D grösser ist als die Wanddicke d der beiden sich daran anschliessenden Flanken 26 der Faltentäler 22. Durch die Abflachung 24 und die verstärkte Wanddicke D der Abflachung 24 ergibt sich ein Faltenbalg 10 mit einer ausgezeichneten Formstabilität, so dass ein unerwünschtes Einfallen des Faltenbalges 10 auch nach längerer Einsatzdauer vermieden wird.

Wie aus der Figur ersichtlich ist, ist die stirnseitige Abflachung 24 des mittleren Faltenberges 18 in bezug zum Unterrand 12 des Faltenbalges 10 senkrecht orientiert.

## Patentansprüche

1. Faltenbalg für ein Fahrzeugsitz-Untergestell, wobei der Faltenbalg (10) abwechselnd umlaufende Faltenberge (16, 18, 20) und Faltentäler (22) aufweist,
**dadurch gekennzeichnet ,**
**dass** zumindest ein mittlerer Faltenberg (18) umlaufend mit einer stirnseitigen Abflachung (24) ausgebildet ist.

2. Faltenbalg nach Anspruch 1,
**dadurch gekennzeichnet**
**dass** drei Faltenberge (16, 18, 20) und zwei Faltentäler (22) vorgesehen sind, wobei der mittlere Faltenberg (18) mit einer stirnseitigen Abflachung (24) ausgebildet ist.

3. Faltenbalg nach Anspruch 1 oder 2,
**dadurch gekennzeichnet ,**
**dass** die stirnseitige Abflachung (24) eine grössere Wanddicke (D) besitzt als die Flanken (26) der daran anschliessenden Faltentäler (22).

4. Faltenbalg nach einem der Ansprüche 1 bis 3,
**dadurch gekennzeichnet,**
**dass** die stirnseitige Abflachung (24) in bezug zum Unterrand (12) des Faltenbalges (10) lotrecht orientiert ist.

## Claims

1. Concertina for a vehicle-seat underframe, the concertina (10) having alternately peripheral peaks (16, 18, 20) and valleys (22), **characterized in that** at least one middle peak (18) is produced peripherally with an end flattening (24).

2. Concertina according to Claim 1, **characterized in that** three peaks (16, 18, 20) and two valleys (22) are provided, the middle peak (18) being produced with an end flattening (24).

3. Concertina according to Claim 1 or 2, **characterized in that** the end flattening (24) has a greater wall thickness (D) than the flanks (26) of the valleys (22) adjoining it.

4. Concertina according to one of Claims 1 to 3, **characterized in that** the end flattening (24) is oriented perpendicularly with respect to the lower edge (12) of the concertina (10).

## Revendications

1. Soufflet destiné au châssis d'un siège de véhicule, du type dans lequel le soufflet (10) se compose de reliefs (16, 18, 20) et de creux (22) périphériques et se succédant alternativement, **caractérisé en ce qu'**au moins un relief périphérique intermédiaire (18) comporte un aplatissement frontal (24).

2. Soufflet selon la revendication 1, **caractérisé en ce que** sont prévus trois reliefs (16, 18, 20) et deux creux (22), le relief intermédiaire (18) comportant un aplatissement frontal (24).

3. Soufflet selon l'une des revendications 1 ou 2, **caractérisé en ce que** l'aplatissement frontal (24) possède une épaisseur de paroi (D) plus importante que les flans (26) des creux qui lui sont adjacents.

4. Soufflet selon l'une des revendications 1 à 3, **caractérisé en ce que** l'aplatissement frontal (24) est orienté à l'aplomb vertical du bord inférieur (12) du soufflet (10).
